Europäisches Patentamt

European Patent Office

Office européen des brevets

(11) Veröffentlichungsnummer: **0 362 744 B1**

(12) **EUROPÄISCHE PATENTSCHRIFT**

(45) Veröffentlichungstag der Patentschrift: **07.12.94**

(21) Anmeldenummer: **89118175.2**

(22) Anmeldetag: **30.09.89**

(51) Int. Cl.⁵: **C08F 4/68**, C08F 4/629, C08F 10/02

(54) Verfahren zum Herstellen von Homopolymerisaten des Ethens sowie Copolymerisaten des Ethens mit höheren alpha-Monoolefinen mittels eines Ziegler-Katalysatorsystems.

(30) Priorität: **07.10.88 DE 3834130**

(43) Veröffentlichungstag der Anmeldung:
**11.04.90 Patentblatt 90/15**

(45) Bekanntmachung des Hinweises auf die Patenterteilung:
**07.12.94 Patentblatt 94/49**

(84) Benannte Vertragsstaaten:
**AT BE DE ES FR GB IT NL SE**

(56) Entgegenhaltungen:
**EP-A- 0 032 734**
**EP-A- 0 120 501**
**DE-A- 3 332 956**
**DE-A- 3 417 238**
**US-A- 4 845 067**

(73) Patentinhaber: **BASF Aktiengesellschaft**
**Carl-Bosch-Strasse 38**
**D-67063 Ludwigshafen (DE)**

(72) Erfinder: **Saive, Roland, Dr.**
**Pfarrer-Friedrich-Strasse 44**
**D-6700 Ludwigshafen (DE)**
Erfinder: **Funk, Guido, Dr.**
**Duererstrasse 5**
**D-6520 Worms 1 (DE)**
Erfinder: **Bachl, Robert, Dr.**
**Parsevalstrasse 2**
**D-6520 Worms 1 (DE)**

Rank Xerox (UK) Business Services
(3.10/3.09/3.3.3)

**Beschreibung**

Die vorliegende Erfindung betrifft ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-$\alpha$-Monoolefinen durch Polymerisation des bzw. der Monomeren bei Temperaturen von 30 bis 200, insbesondere von 50 bis 125 °C und Drücken von 0,1 bis 200, insbesondere von 5 bis 60 bar mittels eines Ziegler-Katalysatorsystems aus

(1) einer Übergangsmetall-Katalystorkomponente und

(2) einer Organoaluminium-Katalysatorkomponente der Formel

$$AlR^1_{m_1} X^1_{3-m_1},$$

worin stehen

$X^1$ für einen Rest $OR^1$, Chlor, Brom bzw. Wasserstoff, vorzugsweise einen Rest $OR^1$ bzw. Chlor,

$R^1$ für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest

$m_1$ für eine Zahl von 1 bis 3, vorzugsweise eine Zahl von 2 bis 3,

und

(3) einer Organohalogen-Katalysatorkomponente ( = Cokatalysator),

mit den Maßgaben, daß das Atomverhältnis Übergangsmetall aus der Katalysatorkomponente (1) : Aluminium aus der Katalysatorkomponente (2) im Bereich von 1:0,1 bis 1:500, vorzugsweise 1:0,2 bis 1:50, und das Molverhältnis Organoaluminium-Katalvsatorkomponente (2) : Organohalogen-Katalysatorkomponente (3) im Bereich von 1 : 0,0001 bis 1 : 10, vorzugsweise 1 : 0,01 bis 1 : 0,8 liegt.

Polymerisationsverfahren dieser Art sind bekannt, wobei im gegebenen Zusammenhang z.B. als repräsentativ das in der DE-A-3 417 238 beschriebene bzw. in der EP-A-312 876 vorgeschlagene gelten kann.

Die genannte Verfahrensart hat - ebenso wie in Parallele zu setzende andere Verfahrensarten - zum Kernstück ein in besonderer Weise ausgestaltetes Ziegler-Katalysatorsystem.

Die Aufgabe, die der Erfindung zugrunde lag, bestand im Auffinden eines Katalysatorsystems, das die Herstellung eines Ethylenhomopolymeren oder eines Copolymeren des Ethylens mit $\alpha$-Olefinen mit gezielt einstellbarer Molmasse und Molmassenverteilung, ausgezeichneten morphologischen Eigenschaften, sowie äußerst hoher Ausbeute ermöglicht.

Eine weitere Aufgabe bestand darin, die technische Durchführbarkeit der Polymerisation unter Anwendung der üblichen Reaktortechnik zu gewährleisten.

Besonders bedeutsam war in diesem Zusammenhang die Erzielung einer hohen Ausbeute, weil hier der Stand der Technik, etwa charakterisiert durch die EP-A-312 876 Verbesserungen wünschenswert erscheinen ließ.

Es wurde gefunden, daß die gestellten Aufgaben gelöst werden können mit einem Katalysatorsystem, welches eine spezielle übergangsmetall-Katalysatorkomponente (1) - die in bestimmter Weise hergestellt sein muß und das Übergangsmetall Vanadium enthalten muß - aufweist.

Gegenstand der vorliegenden Erfindung ist dementsprechend ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-$\alpha$-Monoolefinen, durch Polymerisation des bzw. der Monomeren bei Temperaturen von 30 bis 200, insbesondere von 50 bis 125 °C und Drücken von 0,1 bis 200, insbesondere von 5 bis 60 bar mittels eines Ziegler-Katalysatorsystemsaus

(1) einer Übergangsmetall-Katalysatorkomponente und

(2) einer Organoaluminium-Katalysatorkomponente der Formel

$$AlR^1_{m_1} X^1_{3-m_1},$$

worin stehen

$X^1$ für einen Rest $OR^1$, Chlor, Brom bzw. Wasserstoff, vorzugsweise einen Rest $OR^1$ bzw. Chlor,

$R^1$ für einen $C_1$- bis $C_{18}$-Kohlenwasserstoffrest, insbesondere einen $C_1$- bis $C_{12}$-Alkylrest und vorzugsweise einen $C_2$- bis $C_8$-Alkylrest, und

$m_1$ für eine Zahl von 1 bis 3, vorzugsweise eine Zahl von 2 bis 3,

und

(3) einer Organohalogen-Katalysatorkomponente (= Cokatalysator),

mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 50 und das Molverhältnis Organoaluminium-Katalysatorkomponente (2) : Organohalogen-Katalysatorkomponente (3) im Bereich von 1 : 0,001 bis 1 : 10, vorzugsweise 1 : 0,01 bis 1 : 0,8 liegt.

Das erfindungsgemäße Verfahren ist dadurch gekennzeichnet, daß eingesetzt wird als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 $\mu$m, ein Porenvolumen von 0,3 bis 3, vorzugsweise 1 bis 2,5 $cm^3$/g sowie eine Oberfläche von 100 bis 1.000, vorzugsweise 200 bis 400 $m^2$/g besitzt und die Formel $SiO_2 \bullet aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gew.-Teilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise eines Oxakohlenwasserstoffs gesättigt aliphatischer oder teils gesättigt aliphatischer, teils aromatischer Natur, der ein Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der ein Oxasauerstoffatom sowie 4 bis 6 Kohlenstoffatome aufweist, und vor allem Tetrahydrofuran, und

(IIb) 0,01 bis 50, vorzugsweise 1 bis 30 Gew.-Teilen eines Vanadiumtrihalogenid-Alkohol-Komplexes der Formel $VY_3^1 \bullet n_1 \bullet Z-OH$, worin stehen $Y^1$ für Chlor oder Brom, vorzugsweise Chlor, $n_1$ für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest sowie

(IIc) 1 bis 200, vorzugsweise 1 bis 50 Gew.-Teilen einer Verbindung des Typs

$$BX^2_{n_2} Y^2_{m_2} R^2_p \quad \text{oder} \quad SiX^3_{n_3} Y^3_{m_3} R^3_q ,$$

worin $X^2$ oder $X^3$ steht für einen Rest $OR^2$, $Y^2$ oder $Y^3$, Chlor, Brom oder Wasserstoff und $R^2$ oder $R^3$ für einen $C_1$- bis $C_{18}$-Kohlenwasserstoffrest mit der Maßgabe, daß $n_2 > 0$, $n_3 > 0$ und $n_2 + m_2 + p = 3$ oder $n_3 + m_3 + q = 4$ sein soll, vorzugsweise einer Verbindung des Typs

$$SiX^3_{n_3} R^3_q ,$$

worin $X^3$ steht für einen Rest $OR^3$ und $R^3$ für einen $C_1$-$C_{18}$-Kohlenwasserstoffrest aliphatischer oder aromatischer Natur, wobei $n_3 > 0$ und $n_3 + q = 4$ sein soll, besonders bevorzugt einer Verbindung, in der $n_3 > 1$ und $R^3$ ein Kohlenwasserstoffrest mit 1 bis 10 Kohlenstoffatomen ist, miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2, vorzugsweise von 1 : 0,2 bis 1 : 1,5 liegt, die Suspension (III) bei einer Temperatur, die unterhalb von 200, vorzugsweise von 160 °C und oberhalb des Schmelzpunkts des verwendeten Oxakohlenwasserstoffs (IIa) liegt, bis zur trockenen Konsistenz, Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöst Aluminiumverbindung (V) der Formel

$$\mathrm{AlR}^4_{m_4} \mathrm{X}^4_{3-m_4} \; ,$$

worin stehen

$X^4$ für einen Rest $OR^4$, Chlor, Brom bzw. Wasserstoff, vorzugsweise einen Rest $OR^4$ bzw. Chlor,

$R^4$ für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

$m_4$ für eine zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1 liegt, wobei das dabei als Suspendiertes resultierende festphasige Produkt (VI) die Übergangsmetall-Katalysatorkomponente (I) ist.

Zu dem erfindungsgemäßen Verfahren ist erläuternd das folgende zu bemerken:

Das Polymerisationsverfahren als solches kann, unter Beachtung der kennzeichnenden Besonderheiten, in praktisch allen einschlägig üblichen technologischen Ausgestaltungen durchgeführt werden, etwa als Suspensions-Polymerisationsverfahren oder Trockenphasen-Polymerisationsverfahren. Die erwähnten technologischen Ausgestaltungen, mit anderen Worten: die technologischen Varianten der Polymerisation von Olefinen nach Ziegler, sind aus der Literatur und Praxis wohlbekannt, so daß sich nähere Ausführungen zu ihnen erübrigen. Zu bemerken ist allenfalls noch, daß beim erfindungsgemäßen Verfahren die Komponenten des Katalysatorsystems in mannigfacher Weise in den Polymerisationsraum eingebracht werden können, z.B. (i) die Übergangsmetallkomponente (1), die Organoaluminiumkomponente (2) sowie die Organohalogenkomponente (3) alle örtlich gemeinsam, (ii) die Übergangsmetallkomponente (1) einerseits und ein Gemisch aus (2) und (3) andererseits örtlich getrennt voneinander - was von besonderem Vorteil sein kann - oder (iiii) ein Gemisch aus der Übergangsmetallkomponente (1) und der Organohalogenkomponente (3) einerseits, und die Organoaluminiumkomponente (2) andererseits örtlich getrennt voneinander.

Das neue Verfahren - das vorzugsweise kontinuierlich durchgeführt wird - eignet sich zum Herstellen von Homopolymerisaten des Ethens, vornehmlich aber von Copolymerisaten des Ethens mit untergeordneten Mengen an $C_3$- bis $C_8$-, insbesondere $C_4$- bis $C_6$-$\alpha$-Monoolefinen; wobei letztere in Form von Einzelindividuen oder in Form von Gemischen aus zwei oder mehr Einzelindividuen vorliegen können. Zur Copolymerisation geeignete $\alpha$-Monoolefine sind vor allem die unverzweigten, wie Propen, n-Buten-1, n-Pentan-1, n-Hexen-1, n-Hepten-1 und n-Octen-1, wobei wiederum mit n-Buten-1 sowie n-Hexen-1 (oder Gemischen aus diesen beiden $\alpha$-Monoolefinen) die am besten zu bewertenden Polymerisate erhältlich sind, insbesonderes solche, die auf 100 Moleinheiten Ethen 0,1 bis 10 Moleinheiten des höheren $\alpha$-Monoolefins bzw. der höheren $\alpha$-Monoolefine einpolymerisiert enthalten.

Was die Molekulargewichte der Polymerisate betrifft, so kann deren Regelung in einschlägig üblicher Weise erfolgen, insbesondere mittels Wasserstoff als Regulans.

Zu der beim erfindungsgemäßen Verfahren einzusetzenden Übergangsmetall-Katalysatorkomponente (1) ist im einzelnen das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konlsistenz - Bildung eines festphasigen Zwischenprodukts (IV) - eingedampft wird. In Stufe (1.2) wird letzteres mit einer Lösung einer bestimmten, oben definierten Aluminiumverbindung (V) in Berührung gebracht unter neuerlicher Bildung einer Suspension, - wobei das dabei als Suspendiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird in Substanz oder in einem Oxakohlenwasserstoff suspendiert (zweckmäßigerweise einem Oxakohlenwasserstoff wie er unter (IIa) definiert ist und mit einem Feststoffgehalt der Suspension von nicht weniger als 5 Gew.-%) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Suspension (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Suspensionen schonend eindampft. Dies bedeutet, daß es im allgemeinen zweckmäßig - und bei relativ hohen Oxakohlenwasserstoffen (IIa) u.U. unerläßlich - ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Oxakohlenwasserstoff, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0, 1- bis 50-, vorzugsweise etwa 25-gew.-%ige Suspension des festphasigen Zwischenprodukts (IV) sowie eine 5- bis 80-, vorzugsweise etwa 20 gew.-%ige Lösung der Aluminiumverbindung (V), wobei als Suspensions- bzw. Lösungsmittel, insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei Temperaturen von -25 bis 120°C, insbesondere bei Temperaturen von 25 bis 80°C, ist innerhalb einer Zeitspanne von 15 bis 600 Minuten, insbesondere 60 bis 300 Minuten, die Bildung des - als Suspendiertes vorliegenden - festphasigen Produktes (VI) erfolgt.

Dieses kann zweckmäßigerweise unmittelbar in Form der erhaltenen Suspension - gegebenenfalls nach einer Wäsche mittels Digerieren oder Filtrieren - als Übergangsmetall-Katalysatorkomponente (1) verwendet werden. Falls gewünscht, ist es aber auch möglich, das festphasige Produkt (VI) zu isolieren und dann erst als Katalysatorkomponente (I) einzusetzen; - wobei sich zum Isolieren z.B. der folgende Weg anbietet:

Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Was die stoffliche Seite der Übergangsmetall-Katalysatorkomponenten (I) betrifft, ist im einzelnen noch das Folgende zu sagen:

Der in Stufe (1.1) einzusetzende anorganisch-oxidische Stoff (I) wird im allgemeinen ein Alumosilikat oder - insbesondere - ein Siliciumdioxid sein; wichtig ist, daß er die geforderten Eigenschaften besitzt. - Wie sich gezeigt hat, sind die der gegebenen Spezifikation entsprechenden im Handel erhältlichen einschlägig üblichen Trägerstoffe gut geeignet.

Das zu verwendende Lösungsmittel (IIa) ist ein Oxakohlenwasserstoff gesättigt aliphatischer oder teils gesättigt aliphatischer, teils aromatischer Natur, der 1 bis 2 Oxasauerstoffatome sowie mehr als 3, aber weniger als 19 Kohlenstoffatome aufweist, vorzugsweise ein Oxakohlenwasserstoff gesättigt aliphatischer oder teils gesättigt aliphatischer, teils aromatischer Natur, der 1 Oxasauerstoffatom sowie mehr als 3, aber weniger als 11 Kohlenstoffatome aufweist, insbesondere ein ringgeschlossener Oxakohlenwasserstoff gesättigt aliphatischer Natur, der 1 Oxasauerstoffatom sowie 4 bis 6 Kohlenstoffatome aufweist, und vor allem Tetrahydrofuran. Außer dem letztgenannten eignen sich - unter Beachtung der oben wiedergegebenen Rangfolge - als Oxakohlenwasserstoffe weiterhin z.B. Ethylenglykoldimethylether, Anisol, Tetrahydropyran und Dioxan. Die Oxakohlenwasserstoffe können eingesetzt werden in Form von Einzelindividuen sowie Gemischen aus zwei oder mehr Einzelindividuen.

Der einzusetzende Vanadiumtrihalogenid-Alkohol-Komplex (IIb) hat die Formel $VY_3^1 \cdot n_1 \cdot Z\text{-}OH$, worin stehen $Y^1$ für Chlor oder Brom, vorzugsweise Chlor, $n_1$ für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest. Dabei kann das zugrunde liegende Vanadiumtrihalogenid ein bei Ziegler-Katalysator-Systemen übliches sein. Als alkoholische Komponente eignen sich - unter Wahrung der oben wiedergegebenen Rangfolge - z.B. Methanol, Ethanol, Propanol-2, Butanol-2 und 2-Methylbutanol-2. Die Komplexe können - z.B. zweckmäßigerweise in situ, etwa aus Vanadiumtrichlorid und Propanol-2 in Tetrahydrofuran als Lösungsmittel - nach üblichen Methoden hergestellt sein, z.B. nach D.C. Bradley, H.L. Kehta, Can. J. Chem. 40 (1962), 1710/3; auch sie können eingesetzt werden in Form von Einzelindividuen sowie Gemischen aus zwei oder mehr Einzelindividuen.

Die unter (IIc) einzusetzende Silizium- oder Borverbindung hat die Formel

$$BX^2_{n_2} Y^2_{m_2} R^2_{p} \quad \text{oder} \quad SiX^3_{n_3} Y^3_{m_3} R^3_{q} \, ,$$

worin $X^2$ oder $X^3$ steht für einen Rest $R^2$; $Y^2$ oder $Y^3$ für Chlor, Brom oder Wasserstoff und $R^2$ oder $R^3$ für einen $C_1$- bis $C_{18}$-Kohlenwasserstoffrest mit der Maßgabe, daß $n_2 > 0$, $n_3 > 0$ und $n_2 + m_2 + q = 4$ sein soll, vorzugsweise die Formel

$$SiX^3_{n_3} R^3_{q} ,$$

worin $X^3$ steht für einen Rest $R^3$ und $R^3$ für einen $C_1$- bis $C_{18}$-Kohlenwasserstoffrest aliphatischer oder aromatischer Natur, wobei $n_3 > 0$ und $n_3 + q = 4$ sein soll, besonders bevorzugt eine Formel

$$SiX^3_{n_3} R^3_{q} ,$$

in der $n_3 > 1$, $n_3 + q = 4$ und $R^3$ ein Kohlenwasserstoffrest mit 1 bis 10 Kohlenstoffatomen ist; es eignen sich unter Wahrung der oben wiedergegebenen Rangfolge z.B. Triisopropylborat, Tetrabutylssilikat, Toluyl-triethoxysilan, Phenyltriethoxysilan und Dimethyldiethoxysilan; geeignet sind ebenfalls Gemische derartiger Verbindungen.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium. Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, daß sich hierfür die einschlägig üblichen Verbindungen eignen; als geeignet Individuen sind z.B. zu nennen solche der Formeln $Al(C_2H_5)_3$, $Al(i-C_4H_9)_3$, $Al(n-C_4H_9)_3$, $Al(C_8H_{17})_3$ sowie Isoprenylaluminium.

Als Organohalogen-Katalysatorkomponente (3) schließlich kann zweckmäßigerweise eine Verbindung aus den folgenden Verbindungsklassen eingesetzt werden:

(A) Gesättigte aliphatische Halogenkohlenwasserstoffe; wobei geeignete Individuen sind solche der Formeln $CCl_4$, $CHCl_3$, $CH_2Cl_2$ $CBr_4$, $CHBR_3$, $CFCl_3$, $CF_2Cl_2$ undc $CF_3Cl$. Davon besonders geeignet sind $CCl_4$, $CHCl_3$, $CH_2Cl_2$ und $CF_2Cl_2$. Herausragend gut geeignet ist $CFCl_3$.

(B) Olefinisch ungesättigte aliphatische Halogenkohlenwasserstoffe; wobei geeignete Individuen sind solche der Formeln $CH_2 = CHCl$, $CH_2 = CCl_2$, $CHCl = CCl_2$, $Cl_2C = CCl_2$, $CH_2 = CH-CH_2Cl$, $CCl_2 = CCl-CCl_3$, $CH_2 = CHBr$ und $CH_2 = CH-CH_2Br$. Davon besonders geeignet sind $CH_2 = CHCl$, $CH_2 = CCl_2$ und $CH_2 = CHBr$. Herausragend gut geeignet sind $CH_2 = CH-CH_2Cl$, $CCl_2 = CCl-CCl_3$ und $CH_2 = CH-CH_2Br$.

(C) Acetylenisch ungesättigte aliphatische Halogenkohlenwasserstoffe; wobei geeignete Individuen sind solche der Formeln $CH \equiv C-CH_2Cl$, $CH \equiv C-CH_2Br$, $CH_3-C \equiv C-CH_2Cl$, $CH_3-C \equiv C-CH_2Br$, $C_2H_5-C \equiv C-CH_2Cl$ und $C_25-C \equiv C-CH_2Br$. Davon besonders geeignet sind $CH_3-C \equiv C-CH_2Cl$ und $CH_3C \equiv C-CH_2Br$. Herausragend gut geeignet sind $CH \equiv C-CH_2Cl$ und $CH \equiv C-CH_2Br$.

(D) Aromatische Halogenkohlenwasserstoffe; wobei geeignete Individuen sind $\alpha$-Chlortoluol, $\alpha,\alpha$-Dichlortoluol, $\alpha,\alpha,\alpha$-Trichlortoluol, Diphenylchlormethan, Diphenyldichlormethan, Triphenylchlormethan, $\alpha$-Bromtoluol, $\alpha,\alpha$-Dibromtoluol und $\alpha,\alpha,\alpha$-Tribromtoluol. Davon besonders geeignet ist Bromtoluol. Herausragend gut geeignet sind $\alpha$-Chlortoluol, $\alpha,\alpha$-Dichlortoluol und $\alpha,\alpha,\alpha$-Trichlortoluol.

(E) Gesättigte aliphatische halogenierte Ketone, Carbonsäurechloride und Carbonsäureester; wobei geeignete Individuen sind Hexachloraceton, Monochloracetylchlorid, Dichloracetylchlorid, Trichloracetylchlorid, Monobromacetylbromid, Methylmonochloracetat, Methyldichloracetat und Methyltrichloracetat. Hiervon sind zu bevorzugen Dichloracetylchlorid, Trichloracetylchlorid, Methyltrichloracetat und insbesondere Hexachloraceton, Monochloracetylchlorid sowie Methylmonochloracetat.

(F) Olefinisch ungesättigte aliphatische halogenierte Ketone, Carbonsäurechloride und Carbonsäureester; wobei geeignete Individuen sind Chlormethylvinylketon, Trichlormethylvinylketon, 1-Chloracrylsäurechlorid, 2,3,4,4-Tetrachlorbuten-2-säuremethylester, 2,3,4,4-Tetrachlorbuten-2-säureethylester, 2,3,4,4-Tetrachlorbuten-2-säure-n-butylester, Methylperchlorcrotonat und EThylperchlorcrotonat. Davon sind hervorzuheben Chlormethylvinylketon, Trichlormethylvinylketon, Methylperchlorcrotonat und 2,3,4,4-Tetrachlorbuten-2-säure-n-butylester.

(G) Aromatische halogenierte Carbonsäurechloride und Carbonsäureester; wobei geeignete Individuen sind $\alpha$-Chlorphenylacetylchlorid, Methyl-$\alpha$-Chlorphenylacetat, Ethyl-$\alpha$-chlorphenylacetat, Methyl-$\alpha$,$\alpha$-dichlorphenylacetat und Ethyl-$\alpha$,$\alpha$-dichlorphenylacetat. Davon sind hervorzuheben $\alpha$-Chlorphenylacetylchlorid, Methyl-$\alpha$-Chlorphenylacetat und Methyl-$\alpha$,$\alpha$-dichlorphenylacetat.

Wie sich gezeigt hat, sind von den genannten Verbindungsklassen für den erfindungsgemäßen Zweck am besten geeignet Verbindungen der Klassen (A), (B), (C) sowie (D), gefolgt von (E) und schließlich (F) sowie (G). Die betroffenen Verbindungen können eingesetzt werden in Form von Einzelindividuen sowie Gemischen aus zwei oder mehr Einzelindividuen.

Beispiel

Herstellung der Übergangsmetall-Katalysatorkomponente (1):

Stufe (1.1)

Es wurde ausgegangen von (1.1.1) 16 Gew.-Teilen Siliciumdioxid (SiO$_2$, Teilchendurchmesser 20 bis 45 $\mu$m, Porenvolumen: 1,7 cm$^3$/g, Oberfläche; 320 m$^2$/g) sowie (1.1.2) einer Lösung aus 100 Gew.-Teilen Tetrahydrofuran, 18 Gew.-Teilen eines Vanadiumtrihalogenid-Alkohol-Komplexes der Formel VCl$_3 \cdot$4ZOH, worin Z steht für einen iso-Propylrest sowie 14 Gew.-Teilen Si(OC$_4$H$_9$)$_4$. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70 $^\circ$C gebracht wurde.

Stufe (1.2)

20 Gew.-Teile des in Stufe (1.1) gewonnenen festphasigen Zwischenprodukts (IV) wurden in 103 Gew.-Teilen n-Heptan suspendiert, worauf diese Suspension mit einer Lösung aus 7,2 Gew.-Teilen Diethylaluminiumchlorid in 17 Gew.-Teilen n-Heptan versetzt und die daraus resultierende Suspension kurz bei 65 $^\circ$C gerührt wurde. Anschließend wurde filtriert, dreimal mit n-Heptan gewaschen und im Vakuum getrocknet. Das erhaltene festphasige Produkt (VI) bildet die Katalysatorkomponente (1).

Polymerisation:

Ein 10 l Autoklav wurde mit 5 l i-Butan, 0,27 l Buten-1, 0,093 g der Katalysatorkomponente (1), 5 mmol Tri-i-butylaluminium als Katalysatorkomponente (2) und 2 mmol Trichlorfluormethan als Organohalogen-Katalysatorkomponente (3) beschickt.

Sodann wurde unter Rühren und bei den, jeweils durch Regelung konstant gehaltenen, Parametern Ethenpartialdruck: 16,5 bar, Wasserstoffpartialdruck: 2,0 bar, Temperatur: 80 $^\circ$C, über eine Zeitspanne von 90 min. polymerisiert; danach wurde die Polymerisation durch Entspannen abgebrochen.

Nähere Angaben zu dem erhaltenen Copolymerisat finden sind in der Tabelle.

Vergleichsversuch (entsprechend der deutschen Patentanmeldung P 37 35 252).

Herstellung der Übergangsmetall-Katalysatorkomponente (1):

Stufe (1.1)

Es wurde ausgegangen von (1.1.1) 16 Gew.-Teilen Siliciumdioxid (SiO$_2$, Teilchendurchmesser 20 bis 45 $\mu$m, Porenvolumen: 1,7 cm$^3$/g, Oberfläche. 320 m$^2$/g) sowie (1.1.2) einer Lösung aus 100 Gew.-Teilen Tetrahydrofuran und 18 Gew.-Teilen eines Vanadiumtrihalogenid-Alkohol-Komplexes der Formel VCl$_3 \cdot$4ZOH, worin Z steht für einen iso-Propylrest. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70 $^\circ$C gebracht wurde.

Stufe (1.2)

20 Gew.-Teile des in Stufe (1.1) gewonnenen festphasigen Zwischenprodukts (IV) wurden in 103 Gew.-Teilen n-Heptan suspendiert, worauf diese Suspension mit einer Lösung aus 7,2 Gew.-Teilen Diethylaluminiumchlorid in 17 Gew.-Teilen n-Heptan versetzt und die daraus resultierende Suspension kurz bei 65°C gerührt wurde. Anschließend wurde filtriert, drei mal mit n-Heptan gewaschen und im Vakuum getrocknet. Das erhaltene festphasige Produkt (VI) bildet die Katalysatorkomponente (1).

Polymerisation:

Die Polymerisation wurde durchgeführt wie im Beispiel mit der einzigen Ausnahme, daß statt der erfindungsgemäßen Übergangsmetall-Katalysatorkomponente(1) die gleiche Gewichtsmenge der vorstehend beschriebenen Übergangsmetall-Katalysatorkomponente (1) eingesetzt wurde.

Nähere Angaben zu dem erhaltenen Copolymerisat finden sich in der Tabelle.

Tabelle

| | Ausbeute | | MI[1] | [η][2] | Dichte[3] | SD | Siebanalyse[4] [Gew.-%] [mm] | | |
|---|---|---|---|---|---|---|---|---|---|
| | [g] | [g/g Kat.Komp.(1)] | [g/10'] | [dl/g] | [g/cm³] | [g/l] | <0,5 | 0,5-1,0 | >1,0 |
| Beispiel | 1697 | 18 200 | 31,7 | 1,13 | 0,951 | 375 | 1,5 | 35,1 | 63,4 |
| Vergl.Vers. | 1240 | 13 300 | 25,5 | 1,15 | 0,952 | 385 | 1,7 | 79,5 | 18,6 |

[1] Gemäß DIN 53735, 190°C , 2,16 kp Belastung
[2] gemäß DIN 53728
[3] gemäß DIN 53479
[4] gemäß DIN 53477

Das Beispiel zeigt, daß bei praktisch unveränderten Polymerisateigenschaften ein sehr deutlicher Anstieg der Katalysatorproduktivität stattfindet.

**Patentansprüche**

1. Verfahren zum Herstellen von Homopolymerisaten des Ethens sowie Copolymerisaten des Ethens mit untergeordneten Mengen an $C_3$- bis $C_8$-$\alpha$-Monoolefinen durch Polymerisation des bzw. der Monomeren bei Temperaturen von 30 bis 200°C und Drücken von 0,1 bis 200 bar mittels eines Ziegler-Katalysatorsystems aus

(1) einer Übergangsmetall-Katalysatorkomponente und

(2) einer Organoaluminium-Katalysatorkomponente der Formel

$$AlR^1_{m_1} X^1_{3-m_1} \quad ,$$

worin stehen

$X^1$ für einen Rest $OR^1$, Chlor, Brom bzw. Wasserstoff,

$R^1$ für einen $C_1$- bis $C_{18}$-Kohlenwasserstoffrest, und

$m_1$ für eine Zahl von 1 bis 3,

und

(3) einer Organohalogen-Katalysatorkomponente,

mit den Maßgaben, daß das Atomverhältnis Übergangsmetall aus der Katalysatorkomponente (1) : Aluminium aus der Katalysatorkomponente (2) im Bereich von 1:0,1 bis 1:500 und das Molverhältnis Organoaluminium-Katalysatorkomponente (2) : Organohalogen-Katalysatorkomponente (3) im Bereich von 1:0,0001 bis 1:10 liegt,

dadurch gekennzeichnet, daß eingesetzt wird

als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000 $\mu$m, ein Porenvolumen von 0,3 bis 3 $cm^3/g$ sowie eine Oberfläche von 100 bis 1.000 $m^2/g$ besitzt und die Formel $SiO_2 \cdot aAl_2O_3$ - worin a steht für eine Zahl im Bereich von 0 bis 2 - hat, und

(1.1.2) eine Lösung (II), wie sie sich ergibt beim Zusammenbringen von

(IIa)     100 Gew.-Teilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, und

(IIb)     0,01 bis 50 Gew.-Teilen eines Vanadiumtrihalogenid-Alkohol-Komplexes der Formel

$$VY^1_3 \cdot n_1 \cdot Z\text{-}OH \; ,$$

worin stehen $Y^1$ für Chlor oder Brom, $n_1$ für eine Zahl von 1 bis 6 und Z für einen einwertigen, nicht mehr als 10 Kohlenstoffatome aufweisenden Kohlenwasserstoffrest gesättigt-aliphatischer oder teils gesättigt aliphatischer, teils aromatischer Natur sowie

(IIc)     1 bis 200 Gew.-Teilen einer Verbindung des Typs

$$BX^2_{n_2} Y^2_{m_2} R^2_p \qquad \text{oder} \qquad SiX^3_{n_3} Y^3_{m_3} R^3_q \quad ,$$

worin $X^2$ oder $X^3$ steht für einen Rest $OR^2$, $Y^2$ oder $Y^3$ für Chlor, Brom oder Wasserstoff und $R^2$ oder $R^3$ für einen $C_1$- bis $C_{18}$-Kohlenwasserstoffrest mit der Maßgabe, daß $n_2 > 0$, $n_3 > 0$ und $n_2 + m_2 + p = 3$ oder $n_3 + m_3 + q = 4$ sein soll, miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2 liegt, die Suspension (III) bei einer Temperatur, die unterhalb von 200°C und oberhalb des Schmelzpunkts des verwendeten Oxakohlenwasserstoffs (IIa) liegt, bis zur trockenen Konsistenz, Bildung eines festphasigen Zwischenprodukts (IV), eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel

$$\mathrm{AlR}^4_{m_4} \mathrm{X}^4_{3-m_4} \quad ,$$

worin stehen

$X^4$ für einen Rest $OR^4$, Chlor, Brom bzw. Wasserstoff,

$R^4$ für einen $C_1$- bis $C_{18}$-Kohlenwasserstoffrest, und

$m_4$ für eine Zahl von 1 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2 liegt, wobei das als Suspendiertes resultierende festphasige Produkt (VI) die Übergangsmetall-Katalysatorkomponente (I) ist.

2. Verfahren nach Anspruch 1, dadurch gekennzeichnet, daß gemäß (IIc) eine Verbindung des Typs

$$\mathrm{SiX}^3_{n_3} \mathrm{R}^3_{q}$$

eingesetzt wird, worin $X^3$ steht für einen Rest $OR^3$ und $R^3$ für einen $C_1$- bis $C_{18}$-Kohlenwasserstoffrest aliphatischer oder aromatischer Natur, wobei $n_3 > 0$ und $n_3 + q = 4$ sein soll.

## Claims

1. A process for the preparation of homopolymers of ethene and copolymers of ethene with minor amounts of $C_3$-$C_8$-$\alpha$-monoolefins by polymerization of the monomer or monomers at from 30 to 200°C and under from 0.1 to 200 bar using a Ziegler catalyst system consisting of

(1) a transition metal catalyst component and

(2) an organoaluminum catalyst component of the formula

$$\mathrm{AlR}^1_{m_1} \mathrm{X}^1_{3-m1} ,$$

where $X^1$ is a radical $OR^1$, chlorine, bromine or hydrogen, $R^1$ is a $C_1$-$C_{18}$-hydrocarbon radical, and $m_1$ is from 1 to 3,

and

(3) an organohalogen catalyst component, with the provisos that the atomic ratio of the transition metal from the catalyst component (1) to aluminum from catalyst component (2) is from 1 : 0.1 to 1 : 500, and the molar ratio of organoaluminum catalyst component (2) to organohalogen catalyst component (3) is from 1 : 0.0001 to 1 : 10,

wherein the transition metal catalyst component (1) used is the solid-phase product (VI) which has been obtained by a method in which

(1.1) first

(1.1.1) a finely divided, porous, inorganic oxidic substance (I) which has a particle diameter of from 1 to 1000 $\mu$m, a pore volume of from 0.3 to 3 $cm^3/g$ and a specific surface area of from 100 to 1000 $m^2/g$ and is of the formula $SiO_2.aAl_2O_3$, where a is from 0 to 2, and

(1.1.2) a solution (II), as obtained on combining

(IIa)   100 parts by weight of a saturated aliphatic or partly saturated aliphatic and partly aromatic oxahydrocarbon which has 1 or 2 oxaoxygen atoms and more than 3 but less than 19 carbon atoms and

(IIb)   from 0.01 to 50 parts by weight of a vanadium tri-halide/alcohol complex of the formula

$VY^1_3 .n_1.Z\text{-OH},$

where $Y^1$ is chlorine or bromine, $n_1$ is from 1 to 6 and Z is a monovalent saturated aliphatic or partly saturated aliphatic and partly aromatic hydrocarbon radical of not more than 10 carbon atoms and

(IIc)    from 1 to 200 parts by weight of a compound of the type

$$BX_{n_2}^2 Y_{m_2}^2 R_p^2 \quad or \quad SiX_{n_3}^3 Y_{m_3}^3 R_q^3,$$

where $X^2$ or $X^3$ is a radical $OR^2$, $Y^2$ or $Y^3$ is chlorine, bromine or hydrogen and $R^2$ or $R^3$ is a $C_1$-$C_{18}$-hydrocarbon radical, with the proviso that $n_2$ is > 0, $n_3$ is > 0 and $n_2 + m_2 + p = 3$ or $n_3 + m_3 + q = 4$,

are brought into contact with one another with formation of a suspension (III), with the proviso that the weight ratio of inorganic oxidic substance (I) to transition metal composition (IIb) is from 1 : 0.01 to 1 : 2, and the suspension (III) is evaporated to dryness at a temperature which is below 200°C and above the melting point of the oxahydrocarbon (IIa) used, with formation of a solid-phase intermediate (IV), and

(1.2) then

(1.2.1) the solid-phase intermediate (IV) obtained in stage (1.1) and

(1.2.2) an aluminum compound (V) which is dissolved in an organic solvent and is of the formula

$$AlR_{m_4}^4 X_{3-m4}^4,$$

where $X^4$ is a radical $OR^4$, chlorine, bromine or hydrogen, $R^4$ is a $C_1$-$C_{18}$-hydrocarbon radical and $m_4$ is from 1 to 3,

are brought into contact with one another with formation of a suspension, with the proviso that the weight ratio of solid-phase intermediate (IV) to aluminum compound (V) is from 1 : 0.05 to 1 : 2, the solid-phase product (VI) obtained as the suspended substance being the transition metal catalyst component (1).

2.    A process as claimed in claim 1, wherein a compound of the type

$$SiX_{n_3}^3 R_q^3,$$

where $X^3$ is a radical $OR^3$, $R^3$ is an aliphatic or aromatic $C_1$-$C_{18}$-hydrocarbon radical and $n_3$ is > 0 and $n_3 + q = 4$, is used in accordance with (IIc).

**Revendications**

1.    Procédé de préparation d'homopolymères de l'éthylène ainsi que de copolymères de l'éthylène avec des quantités moindres d'$\alpha$-monooléfines en $C_3$-$C_8$ par polymérisation du au des monomères a des températures de 30 a 200°C et sous des pression de 0,1 à 200 bar, à l'aide d'un système catalyseur de Ziegler forme de

1) un composant de catalyseur contenant un métal de transition et

2) un composant de catalyseur organoaluminique de formule

$$AlR_{m_1}^1 X_{3-m_1}^1,$$

dans laquelle

$X^1$    représente un reste $OR^1$, un atome de chlore, de brome ou d'hydrogène,

$R^1$ représente un reste hydrocarbone en $C_1$ -$C_{18}$ et

$m_1$ est mis pour un nombre de 1 à 3,

et

3) un composant de catalyseur organohalogéné,

a la condition que le rapport atomique du métal de transition du composant de catalyseur (1) à l'aluminium du composant de catalyseur (2) soit compris entre 1:0,1 et 1:500 et que le rapport molaire du composant de catalyseur organoaluminique (2) au composent de catalyseur organohalogéné (3) soit compris entre 1:0,0001 et 1:10,

caractérisé en ce qu'on utilise comme composant de catalyseur contenant un métal de transition (1) le produit en phase solide (VI), qui a été obtenu comme suit :

(1.1) on mélange ensemble sous agitation jusqu'à formation d'une suspension (III)

(1,1,1) un matériau oxydé inorganique, poreux et finement divisé, qui présente un diamètre de particules de 1 à 1 000 $\mu$m, un volume de pores de 0,3 a 3 cm³/g ainsi qu'une surface spécifique de 100 à 1 000 m²/g et qui a la formule $SiO_2.aAl_2O_3$, où a est mis pour un nombre compris entre 0 et 2, et

(1.1.2) une solution (II) telle qu'elle résulte du mélange de

(IIa) 100 parties en poids d'un oxahydrocarbure de nature aliphatique saturée ou de nature en partie aliphatique saturée, en partie aromatique, qui présente 1 ou 2 atomes d'oxygène oxa ainsi que plus de 3 mais moins de 19 atomes de carbone, et

(IIb) 0,01 a 50 parties en poids d'un complexe alcool/trihalogénure de vanadium de formule

$$VY^1_3 \bullet n_1 \bullet Z\text{-}OH ,$$

dans laquelle $Y^1$ représente le chlore ou le brome, $n_1$ représente un nombre de 1 à 6 et Z représente un reste hydrocarboné monovalent, ne contenant pas plus de 10 atomes de carbone de nature aliphatique saturée ou de nature en partie aliphatique saturée en partie aromatique ainsi que

(IIc) 1 à 200 parties en poids d'un composé du type

$$BX^2_{n_2} Y^2_{m_2} R^2_p \qquad ou \qquad SiX^3_{n_3} Y^3_{m_3} R^3_q ,$$

dans lequel $X^2$ ou $X^3$ représentent un reste $OR^2$, $Y^2$ ou $Y^3$ représentent un atome de chlore, de brome ou d'hydrogène et $R^2$ ou $R^3$ représentent un reste hydrocarboné en $C_1$-$C_{18}$ à la condition que $n_2 > 0$, $n_3 > 0$ et $n_2 + m_2 + p = 3$ ou $n_3 + m_3 + q = 4$,

à la condition que le rapport pondéral de la matière oxydée inorganique (I) à la composition de métal de transition (IIb) soit comprise entre 1:0,01 et 1:2,

on évapore la suspension (III) à une température qui est inférieure à 200°C et supérieure au point de fusion de l'oxahydrocarbure utilisé (IIa) jusqu'à une consistance sèche avec formation d'un produit intermédiaire en phase solide (IV), et

(1.2) puis on mélange ensemble sous agitation avec formation d'une suspension

(1.2.1) le produit intermédiaire en phase solide (IV) obtenu dans l'étape (1.1) et

(1.2.2) un composé d'aluminium (V) en solution dans un solvant organique de formule

$$AlR^4_{m_4} X^4_{3-m_4} ,$$

dans laquelle

$X^4$ représente un reste $OR^4$, un atome de chlore, de brome ou d'hydrogène,

$R^4$ représente un reste hydrocarboné en $C_1$-$C_{18}$, et

$m_4$ représente un nombre de 1 à 3,

à la condition que le rapport pondéral du produit intermédiaire en phase solide (IV) et du composé aluminium (V) soit compris entre 1:0,05 et 1:2,

le produit (VI) en phase solide résultant sous forme de suspension étant le composant de catalyseur contenant le métal de transition (I).

2. Procédé selon la revendication 1, caractérise en ce que, selon (IIc), on utilise un composé du type

$$SiX^3_{n_3} R^3_q$$

dans lequel $X^3$ représente un reste $OR^3$ et $R^3$ représente un reste hydrocarboné en $C_1$-$C_{18}$ de nature aliphatique ou aromatique, avec $n_3 > 0$ et $n_3 + q = 4$.